# EUROPÄISCHE PATENTANMELDUNG

(11) **EP 1 246 344 A2**
(43) Veröffentlichungstag der Anmeldung: **02.10.2002**
(21) Anmeldenummer: 02005700.6
(22) Anmeldetag: 13.03.2002
(51) Int. Cl.: H02K 5/04

(54) **Elektrische Maschine**

(30) Priorität: 14.03.2001 DE 10112054
(71) Anmelder: ROBERT BOSCH GMBH, 70442 Stuttgart (DE)
(72) Erfinder: Braun, Horst, 70469 Stuttgart (DE); Elser, Armin, 73547 Lorch (DE); Bilsing, Thomas, 74357 Boennigheim (DE)

(57) **Zusammenfassung**

Die Erfindung betrifft eine elektrische Maschine mit einem Ständer (10), der einen Ständerwickelkopf (12) aufweist, und einem Gehäuse (14), das den Ständerwickelkopf (12) zumindest teilweise umgibt, wobei die Form des Gehäuses (14) zumindest teilweise der Form des Ständerwickelkopfes (12) angepasst ist.

## Beschreibung

Die Erfindung betrifft eine elektrische Maschine mit einem Ständer, der einen Ständerwickelkopf aufweist, und einem Gehäuse, das den Ständerwickelkopf zumindest teilweise umgibt.

### Stand der Technik

Beim Betrieb elektrischer Maschinen kommt es naturgemäß zu einer Wärmeentwicklung. Man ist bestrebt, diese Wärme abzuführen. Zu diesem Zweck gestaltet man den Ständerwickelkopf einer elektrischen Maschine möglichst so, dass eine große Kühloberfläche zur Verfügung gestellt wird. Bei guter Kühlung des Ständerwickelkopfes gelingt es, die ohmschen Verluste in den Ständerwicklungen zu reduzieren.

Eine gängige Möglichkeit, die Kühloberfläche zu vergrößern, besteht darin, den Ständerwickelkopf mit einer vergrößerten axialen Abmessung zu versehen. Nachteilig daran ist allerdings, dass sich durch die Vergrößerung des Ständerwickelkopfes in axialer Richtung auch die Außenabmessung der elektrischen Maschine in axialer Richtung vergrößert.

### Vorteile der Erfindung

Die Erfindung baut auf der gattungsgemäßen elektrischen Maschine dadurch auf, dass die Form des Gehäuses zumindest teilweise der Form des Ständerwickelkopfes angepasst ist. Durch diesen Umstand spielt die axiale Ausdehnung des Ständerwickelkopfes für das äußere Baumaß der Maschine nicht mehr die entscheidende Rolle. Bei den Lösungen des Standes der Technik, sind die Gehäuseteile flach ausgestattet, so dass die axiale Ausdehnung des Gehäuses über den gesamte radialen Bereich der elektrischen Maschine von der axialen Ausdehnung des Ständerwickelkopfes mitbestimmt wird. Durch die Anpassung des Gehäuses an den Ständerwickelkopf ist es nunmehr möglich, die axiale Ausdehnung des Gehäuses in weiten Bereichen zu reduzieren und somit die axiale Gesamtausdehnung der elektrischen Maschine zu verringern. Dabei ist zu beachten, dass der Bereich, dessen axiale Länge reduziert ist, im Allgemeinen für den Aufbau weiterer elektronischer Komponenten genutzt wird, so dass die maximale axiale Länge nicht von der axialen Ausdehnung des Gehäuses im Bereich des Ständerwickelkopfes beeinflusst werden muss.

Vorzugsweise ist der angepasste Gehäuseteil der Lagerschild der elektrischen Maschine. Derartige Lagerschilde werden gemäß dem Stand der Technik im Allgemeinen mit einem flachen Boden ausgestattet. Eine Anpassung der Lagerschilde kann zu einer Reduzierung des axialen Baumaßes führen.

In einer bevorzugten Ausführungsform weist der Lagerschild in dem angepassten Bereich eine im Wesentlichen konstante Wandstärke auf. Die Reduzierung der axialen Länge der elektrischen Maschine erfolgt somit durch eine Anpassung des Lagerschildes, wobei eine Anformung des Lagerschildes an die Kontur des Ständerwickelkopfes erfolgt. Eine derartige Formgebung eines Lagerschildes mit konstanter Wandstärke ist fertigungstechnisch besonders einfach realisierbar.

Es kann aber auch nützlich sein, wenn der Lagerschild durch eine teilweise Reduzierung der Wandstärke angepasst ist. Somit kann auf der Innenseite des Lagerschildes eine Ausnehmung vorgesehen sein, die der Form des Ständerwickelkopfes angepasst ist. Die Außenseite des Lagerschildes kann eine konstante axiale Länge aufweisen. Ebenfalls ist es denkbar, dass die Formung des Lagerschildes, beispielsweise durch Biege- oder Stanztechniken, mit der Bereitstellung einer Ausnehmung im Innenbereich des Lagerschildes kombiniert ist.

Besonders vorteilhaft ist, dass durch die Anpassung des Lagerschildes eine Verbesserung der Kühlluftführung im Bereich der Ständerwicklung erfolgt. Durch das "Anschmiegen" der Innenkontur des Lagerschildes an die Form des Ständerwickelkopfes schmiegt sich auch der Kühlluftstrom an die Ständerwicklung an. Folglich kommt es zu einer verbesserten Kühlung und mithin zu einem verbesserten Wirkungsgrad der Kühlung.

Dabei ist als besonders vorteilhaft zu verzeichnen, dass durch die Anpassung des Lagerschilds an den Ständerwickelkopf ein in radialer Richtung im Wesentlichen konstanter Strömungsquerschnitt für die Kühlluft zur Verfügung gestellt wird. Bei Lösungen des Standes der Technik ist der Strömungsquerschnitt häufig variabel, so dass beispielsweise Wirbelbildungen auftreten. Diese behindern eine wirkungsvolle Kühlluftströmung und bewirken somit eine Verschlechterung des Wirkungsgrades der Kühlung. Bei sich radial nach außen vergrößernden Strömungsquerschnitten kann es ferner zu einem Abreißen der Strömung kommen, was auch eine Verschlechterung des Strömungsverhaltens nach sich zieht. Wird jedoch ein in radialer Richtung im Wesentlichen konstanter Strömungsquerschnitt zur Verfügung gestellt, so werden diese Nachteile vermieden.

Der Erfindung liegt die Erkenntnis zugrunde, dass man durch eine Anpassung des Gehäuses einer elektrischen Maschine an die Form des Ständerwickelkopfes eine Reduzierung der axialen Baugröße der elektrischen Maschine erreicht. Ferner kommt es zu einem weiteren positiven Effekt, nämlich der Verbesserung der Kühlluftführung.

### Zeichnungen

Die Erfindung wird nun mit Bezug auf die begleitenden Zeichnungen anhand bevorzugter Ausführungsformen beispielhaft erläutert.

### Dabei zeigt:

- Figur: 1A eine schematische Darstellung eines Teils einer elektrischen Maschine des Standes der Technik;
- Figur 1B: eine schematische Darstellung eines Teils einer elektrischen Maschine gemäß der vorliegenden Erfindung; und
- Figur 2: eine schematische Darstellung eines Teils einer weiteren elektrischen Maschine gemäß der vorliegenden Erfindung.

### Beschreibung der Ausführungsbeispiele

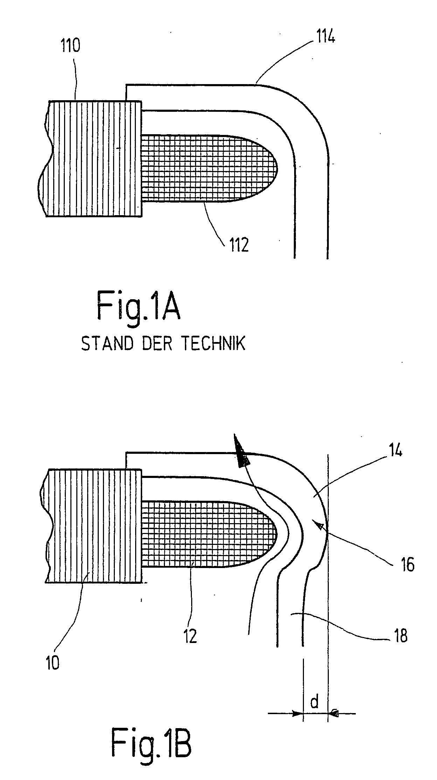

In Figur 1A ist ein Teil einer elektrischen Maschine des Standes der Technik dargestellt. Die Darstellung zeigt einen Querschnitt eines Ständers 110. Der Ständer 110 weist einen Ständerwickelkopf 112 auf. Der Ständerwickelkopf 112 ist von einem Lagerschild 114 umgeben, so dass dieses als Gehäuseteil wirkt. Der Ständerwickelkopf 112 hat eine relativ große axiale Ausdehnung, so dass zum Zwecke der Kühlung eine große Oberfläche zur Verfügung steht. Durch diese axiale Ausdehnung ist aber auch die äußere Bauform der elektrischen Maschine bestimmt, da der Lagerschild 114 einen flachen Boden hat.

Figur 1B zeigt eine Darstellung einer elektrischen Maschine gemäß der vorliegenden Erfindung. Die Ansicht entspricht derjenigen aus Figur 1A. Wiederum sind ein Ständer 10 und einer Ständerwickelkopf 12 dargestellt. Erfindungsgemäß ist nun aber der als Gehäuseteil wirkende Lagerschild 14 dem Ständerwickelkopf 12 angepasst. Der Bereich 16 des Lagerschildes weist eine unveränderte axiale Ausdehnung auf. In einem radial innen liegenden Bereich 18 des Lagerschildes 14 ist die axiale Ausdehnung jedoch um das Maß d verringert. Somit verringert sich auch die axiale Ausdehnung der elektrischen Maschine in axialer Richtung, da die Außenseite des Lagerschildes 14 im Allgemeinen noch für den Anbau elektronischer Komponenten verwendet wird. Bei dieser Ausführungsform ist die Wandstärke des Lagerschildes 14 im Wesentlichen konstant, und die Anpassung des Lagerschildes 14 ist durch eine Verformung des Lagerschildes realisiert.

Eine weitere bemerkenswerte Tatsache ist anhand von Figur 1B zu erkennen. Durch den Pfeil ist der Kühlluftstrom angedeutet, welcher zur Kühlung des Ständerwickelkopfes 12 verwendet wird. Es ist dargestellt, dass sich der Kühlluftstrom an den Ständerwickelkopf 12 anpasst, so dass die Kühlung verbessert wird. Im Rahmen der Erfindung ist sogar ein in radialer Richtung konstanter Strömungsquerschnitt realisierbar, was das Strömungsverhalten weitergehend verbessert.

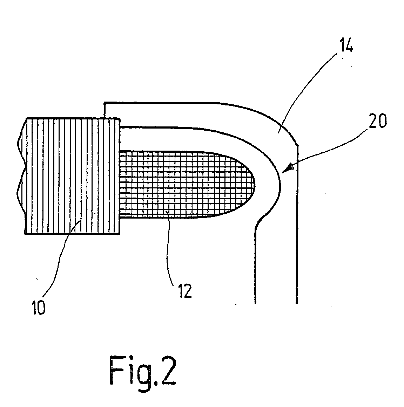

Figur 2 zeigt eine weitere Ausführungsform einer erfindungsgemäßen elektrischen Maschine. Die Ansicht entspricht Figur 1B. Ebenfalls entspricht der Ständer 10 mit dem Ständerwickelkopf 12 den jeweiligen Komponenten gemäß Figur 1B. Im Unterschied zu Figur 1B hat der Lagerschild 14 gemäß Figur 1A eine flache Außenseite. Die Anpassung des Lagerschildes 14 an den Ständerwickelkopf 12 ist durch eine Ausnehmung 20 an der Innenseite des Lagerschildes 14 realisiert. Auch hierdurch kommt es zu einer Verringerung der äußeren axialen Abmessungen der elektrischen Maschine. Ebenfalls wird die Kühlluftführung vorteilhaft beeinflusst.

Neben den Darstellungen gemäß Figur 1B und Figur 2 ist es ebenfalls denkbar, dass zum einen die Wandstärke des Lagerschildes im Bereich des Ständerwickelkopfes verringert wird, so dass hierdurch eine Anpassung gelingt, und dass zum anderen eine weitere Anpassung dadurch realisiert wird, dass der Lagerschild verformt wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Elektrische Maschine mit
- einem Ständer (10), der einen Ständerwickelkopf (12) aufweist, und
- einem Gehäuse (14), das den Ständerwickelkopf (12) zumindest teilweise umgibt,
**dadurch gekennzeichnet, dass** die Form des Gehäuses (14) zumindest teilweise der Form des Ständerwickelkopfes (12) angepasst ist.

2. Elektrische Maschine nach Anspruch 1, **dadurch gekennzeichnet, dass** der angepasste Gehäuseteil der Lagerschild (14) der elektrischen Maschine ist.

3. Elektrische Maschine nach Anspruch 1 oder 2, **dadurch gekennzeichnet, dass** der Lagerschild (14) in dem angepassten Bereich (16) eine im Wesentlichen konstante Wandstärke aufweist.

4. Elektrische Maschine nach einem der vorangehenden Ansprüche, **dadurch gekennzeichnet, dass** der Lagerschild (14) durch eine teilweise Reduzierung der Wandstärke angepasst ist.

5. Elektrische Maschine nach einem der vorangehenden Ansprüche, **dadurch gekennzeichnet, dass** durch die Anpassung des Lagerschilds eine Verbesserung der Kühlluftführung im Bereich des Ständerwickelkopfes (12) erfolgt.

6. Elektrische Maschine nach einem der vorangehenden Ansprüche, **dadurch gekennzeichnet, dass** durch die Anpassung des Lagerschilds (14) an den Ständerwickelkopf (12) ein in radialer Richtung im Wesentlichen konstanter Strömungsquerschnitt für die Kühlluft zur Verfügung gestellt wird.
